# EUROPEAN PATENT SPECIFICATION

(11) **EP 4 188 798 B1**
(45) Date of publication and mention of the grant of the patent: **27.11.2024**
(21) Application number: 21735749.0
(22) Date of filing: 24.06.2021
(51) Int. Cl.: B64C 39/02, B64D 13/06

(54) **MOUNTING STRUCTURES FOR SECURING A PAYLOAD**
MONTAGESTRUKTUREN ZUR SICHERUNG EINER NUTZLAST
STRUCTURES DE MONTAGE POUR FIXER UNE CHARGE UTILE

(30) Priority: 30.07.2020 GB 202011826
(43) Date of publication of application: 07.06.2023
(73) Proprietor: BAE SYSTEMS plc, London SW1Y 5AD (GB)
(72) Inventor: BISHOP, Simon, Bournemouth Dorset BH23 4JE (GB); MATTHEWS, Carl Martin, Bournemouth Dorset BH23 4JE (GB)
(74) Representative: BAE SYSTEMS plc Group IP Department
(86) International application number: PCT/GB2021/051608
(87) International publication number: WO 2022/023696

(56) References cited:
- EP-A2- 2 147 859
- WO-A1-2019/097195
- US-A1- 2018 170 553
- US-A1- 2019 373 769
- US-B2- 9 845 158

## Description

### TECHNICAL FIELD

Aspects relate, in general, to mounting structures, and more specifically, although not exclusively, to mounting structures configured to receive a payload for a vehicle or platform.

### BACKGROUND

High-Altitude Long Endurance (HALE) unmanned aerial systems (UAS) can comprise aircraft which operate at high-altitudes for extended periods of time. Such aircraft can operate efficiently at altitudes ranging from around 9.6 to 22.5km (6 to 14 miles) (e.g. in the tropopause). Their high-altitude deployment and minimal need for active monitoring or control make them ideal candidates for a multitude of applications such as ultra-persistent intelligence, surveillance and reconnaissance, data collection and so on. In this connection, multiple sensor devices can be provided on a HALE aircraft to collect data of interest.

In order to maintain such high altitudes for extended periods of time, HALE systems are devoid of many functional elements of traditional aircraft in order to minimise their weight. For example, traditional cooling apparatus is typically not provided due to the increase in weight and bulk that flows from its installation and use. However, since HALE aircraft operate at relatively low speeds and high altitude, airflow over the aircraft's surfaces is low. It can therefore be difficult to effectively remove heat generated by electronic components such as those present in sensor devices that may be provided on the aircraft. For example, monitoring or data collection equipment can generate heat in operation, which must be dissipated in order to ensure the continued functioning of such equipment.

Furthermore, due to the strict weight limitations imposed on HALE aircraft, and since it may be possible for sensor devices to be in a quasi-plug-and-play form in which an off the shelf sensor assembly may be removably attachable to a suitably specified HALE aircraft, it is not feasible for sensor devices to incorporate integrated cooling functionality since specifications relating to weight and operational parameters may vary leading to the potential to damage a sensor device and/or the aircraft.

US9845158 discloses a battery containment pod including a body formed of a lightweight material. The body has an aerodynamic exterior shape and an interior cavity formed in the lightweight material, the size and shape of the interior cavity designed to accommodate one or more battery packs. A smooth exterior coating covers the exterior shape of the body, and an attachment structure formed in or on the body allows the body to be coupled to a flight vehicle.

US2018170553 discloses a passive cooling solution with sealed UAV enclosure system allows heat from a semiconductor chip to be dissipated to the ambient environment through evaporation/condensation phase-change cooling and air cooling a heat sink such as a fin without any additional power consumption to operate cooling solution.

WO2019097195 discloses a payload module for a stratospheric drone. The moduel comprises a casing and a piece of optical equipment comprising an optical axis, mounted in the casing. The module further comprises a mirror positioned on the optical axis facing the piece of optical equipment, and capable of being oriented about at least one axis over an angular range. The casing comprises a through-opening shaped such that any light beam received or emitted by the piece of optical equipment parallel to the optical axis and reflected by the mirror passes through the through-opening, over the entire angular range of the mirror.

EP2147859 discloses a fan of a UAV that creates airflow comprising outside air directed across the duct of the UAV. Utilizing this airflow generated by the fan of a UAV to provide heat transfer from a equipment enclosure accomplishes efficient heat transfer.

US2019373769 discloses a vibration isolating thermally conductive connector. T includes a first thermally conductive element configured to draw heat from a heat source, a second thermally conductive element separated from the first thermally conductive element, and a flexible seal connected with the first and second thermally conductive elements and defining an enclosed cavity between the elements.

### SUMMARY

There is provided a mounting structure for securing a payload to an aerial vehicle and for thermally regulating an electronic support system for the payload, according to claim 1.

The electronic support system can provide selected functionality for a payload, which payload can be mounted to the mounting structure. Heat generated by the electronic support system as a result of use of the payload can be dissipated to the external environment.

The thermally conductive coupling can form an integral part of the body section. The thermally conductive coupling can be disposed on the body section. The thermally conductive coupling can comprise a mechanical attachment structure. The mechanical attachment structure can comprise a male fastening mechanism so configured as to engage with a female receptor of the payload, or vice-versa. The mechanical attachment structure can be so profiled as to enable an interference fit between the mechanical attachment structure and a portion of a payload. The mechanical attachment structure can comprise a sleeve or collar configured to receive the portion of the payload. The sleeve or collar can be so dimensioned or profiled as to receive the portion of the payload on an outside or inside surface thereof. The thermal management system comprises a bimetallic strip so configured as to mechanically displace in response to heat generated by the electronic support system, whereby to cause a portion of the bimetallic strip to come into contact with the thermally conductive coupling so as to dissipate heat. The thermal management system can comprise a heat pipe to transfer heat to the thermally conductive coupling. The heat pipe can be configured such that, in response to heat generated by the electronic support system, a working liquid tends to evaporate at a first end of the heat pipe situated adjacent to the electronic support system and condense at a second end of the heat pipe situated adjacent to or in contact with the thermally conductive coupling thereby resulting in a transfer of heat to the thermally conductive coupling. The body section can further comprise an interface plate defining one or more apertures to enable connections to be made from a payload to an electronic support system within the housing.

There is provided an aerial vehicle comprising a mounting structure as claimed in any preceding claim, according to claim 12, whereby to enable a payload to be removably mounted to the aerial vehicle. The aerial vehicle can be a high-altitude long endurance unmanned aerial vehicle. The mounting structure can be provided on a fuselage or a wing of the aerial vehicle.

### BRIEF DESCRIPTION OF THE DRAWINGS

For a more complete understanding of the present disclosure, reference is now made, by way of example only, to the following descriptions taken in conjunction with the accompanying drawings, in which:
Figure 1 is a schematic representation of a HALE aircraft according to an example;
Figure 2 is a schematic representation of a mounting structure according to an example;
Figure 3 is a schematic representation of a thermally conductive coupling according to an example;
Figure 4 is a schematic representation of a thermally conductive coupling according to an example;
Figure 5 is a schematic representation of a mounting structure according to an example; and
Figure 6 is a schematic representation of a mounting structure according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed. On the contrary, all modifications and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

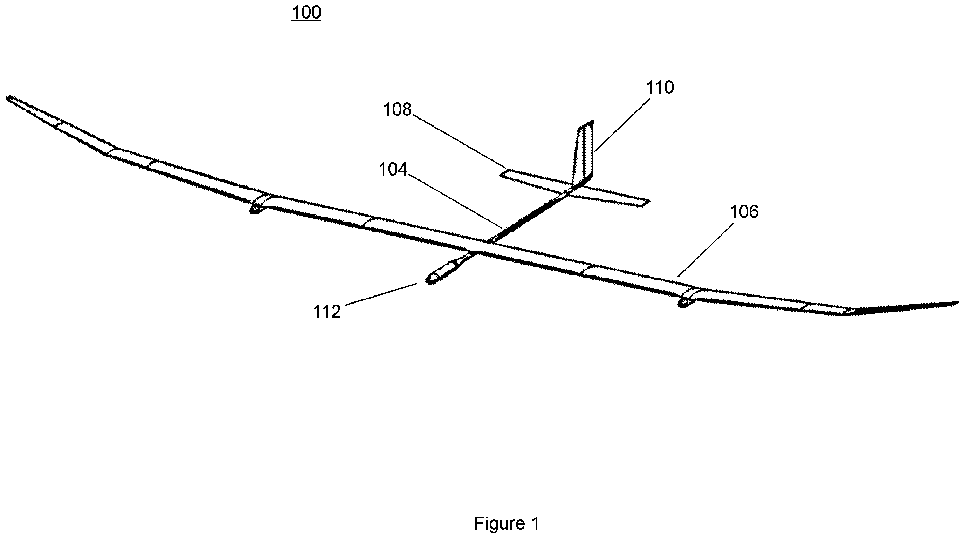

Figure 1 is a schematic representation of a HALE aircraft according to an example. The aircraft 100, shown in perspective view, comprises a wing member 106, which has a relatively large wingspan, such as up to around 35 metres for example, and a relatively narrow chord, such as around 1 metre for example. The wing member 106 is coupled to a fuselage 104. To aerodynamically balance the vehicle 100, a horizontal tail plane 108 and a vertical tail fin (or vertical stabilizer) 110 are coupled to the rear of the fuselage 104.

In an example, a payload can be coupled to the aircraft. The payload can comprise a sensor device for example, which is configured to generate data of interest when the aircraft is airborne. The payload can be supported by an electronic support system provided by the aircraft. That is, an electronic support system can be provided that enables a multitude of payloads to be mounted to the aircraft without the need for them to comprise certain functionality. The nature of the electronic support system can vary, but can, in some examples, comprise at least one or more of: data cabling to connect to a payload for the purposes of data transfer between the payload and the aircraft, power supply cabling and power supply means, such as a battery for example, storage apparatus to store data received over the data cabling from the payload, a controller to manage the receipt/transmission of data from/to the payload and/or control the power supplied to the payload and/or monitor the condition of the payload and sensor device. In general, an electronic support system can comprise one or more components or devices that are configured to enable a payload to be supported when attached to an aircraft or platform. In the present context, an electronic support system can thus comprise any heat generating elements that are provided within the housing of a mounting structure according to an example. The thermal management system is provided to enable heat generated by such heat generating elements to be sunk away to the outside environment in order to enable the optimal functioning of any sensor device that forms part of a payload mounted on the mounting structure and which is supported by the electronic support system of the aircraft.

A mounting structure for securing such a payload to aircraft is provided. The mounting structure also enables thermal regulation of the electronic support system referred to above. The mounting structure comprises a body section defining a housing configured to receive an electronic support system, such as that provided by the aircraft in question, and a thermal management system. A thermally conductive coupling is provided to enable a payload to be mechanically coupled to the body section. The thermal management system is so configured as to transfer heat generated by an electronic support system used to support a connected payload to the thermally conductive coupling where it is dissipated away from the mounting structure, thereby enabling temperature regulation.

A mounting structure according to an example may be located on the fuselage 104. For example, a mounting structure can be provided on the nose 112 of the aircraft 100. Alternatively, or in addition, a mounting structure can be provided on the wing member 106 (on one, other or both sides relative to the fuselage for example) and/or on the tail plane 108, vertical tail fin 110. As such, one or more mounting points can be provided for the aircraft that are configured to enable releasable mounting (or connection) of a payload to the aircraft. An electronic support system can be provided by the aircraft in order to enable power and/or data transfer to/from a payload. That is, certain functions and requirements of a payload can be provided by an electronic support system of the aircraft. Such an electronic support system, or part thereof (such as cabling for example) can be provided in the housing of the mounting structure where it is accessible so as to enabling easy payload mounting. In some examples, a payload may comprise a sensor that does not require an electronic support structure. Accordingly, the mounting structure may be devoid of electronic support structure or, if provided by the aircraft, it may simply not be connected to the payload.

In an example, the thermal management system of the mounting structure enables the temperature of an electronic support system to be regulated. The thermal management system can comprise one or more heat pipes to transfer heat to the thermally conductive coupling. In an implementation, at least a portion of the thermally conductive coupling can extend into an airflow caused by movement of the aircraft. That is, when airborne for example, the thermally conductive coupling, or a portion thereof, can extend into an airflow over the aircraft, thereby transferring heat from the thermally conductive coupling to the environment. In an example, the heat transferred to the thermally conductive coupling can originate from the electronic support structure. Accordingly, the thermal management system can be so configured as to remove heat from the electronic support system that may be generated when a sensor device of a payload is in operation.

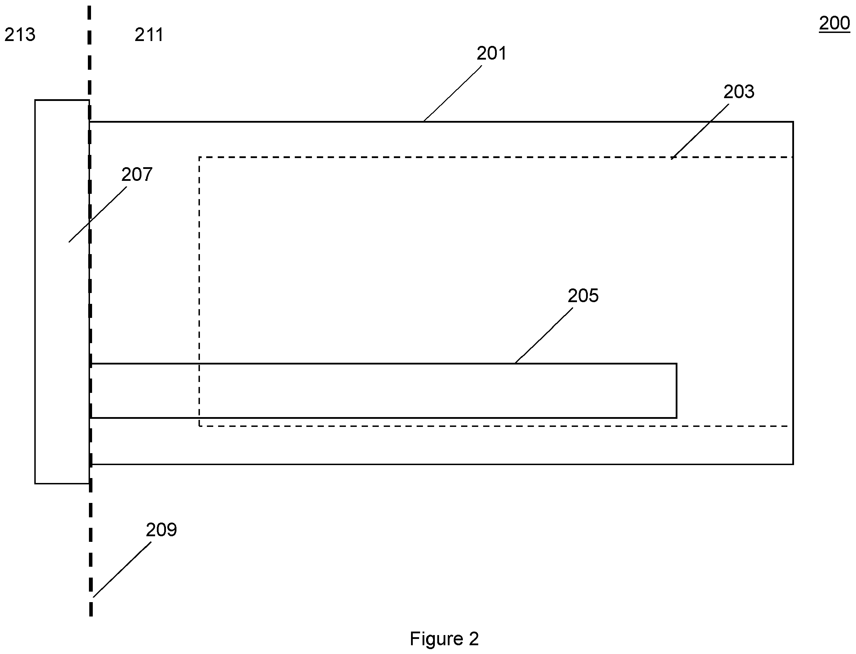

Figure 2 is a schematic representation of a mounting structure according to an example. The mounting structure 200 comprises a body section 201 defining a housing 203. In an example, the housing 203 can be a cavity that is so sized and/or profiled to receive an electronic support structure of an aircraft. The housing 203 comprises a thermal management system 205. In the example of figure 2, the thermal management system 205 is coupled to a thermally conductive coupling 207. The thermally conductive coupling enables a payload (not shown in figure 2) to be mechanically coupled to the body section 201.

The thermal management system 205 is so configured as to transfer heat generated by an electronic support system to the thermally conductive coupling 207 where it is dissipated away from the mounting structure, thereby enabling temperature regulation.

In the example of figure 2, the thermally conductive coupling 207, to which a payload may be attached, lies outside of the interior of the aircraft. The line 209 shows the demarcation between the interior 211 and exterior 213 of the aircraft on which the mounting structure 200 is provided.

In an example, the thermally conductive coupling 207 can form an integral part of the body section 201. Alternatively, it can be disposed on the body section, such as in the case that the coupling 207 is a separate element that is mounted or fixed on the body. 201. In either case, it is possible that the position of the mounting structure 200 relative to the skin of an aircraft varies from that described with reference to figure 2. That is, line 209 may be shifted such that, for example, more (or all) of the body section 201 lies in the region 213. It is also possible for some of the thermally conductive coupling 207 to lie within the region 211. Although the thermally conductive coupling 207 is shown extending out (overhanging) from the upper and lower regions of the body section 201, it is possible that may also lie flush with the body section 201 or have a smaller dimension than the body section such that the body section overhangs instead for example.

According to an example, the thermally conductive coupling 207 comprises a mechanical attachment structure. The mechanical attachment structure can comprise a male fastening mechanism so configured as to engage with a female receptor of the payload, or vice-versa. Alternatively, the mechanical attachment structure can be so profiled as to enable an interference fit between the mechanical attachment structure and a portion of a payload, thereby obviating the need for male/female components. In such a case, the mechanical attachment structure can comprise a sleeve or collar configured to receive the portion of the payload. The sleeve or collar may be so dimensioned or profiled as to receive the portion of the payload on an outside or inside surface thereof. That is, the part of the payload that fits on the body can sit within or on the outside of the collar part.

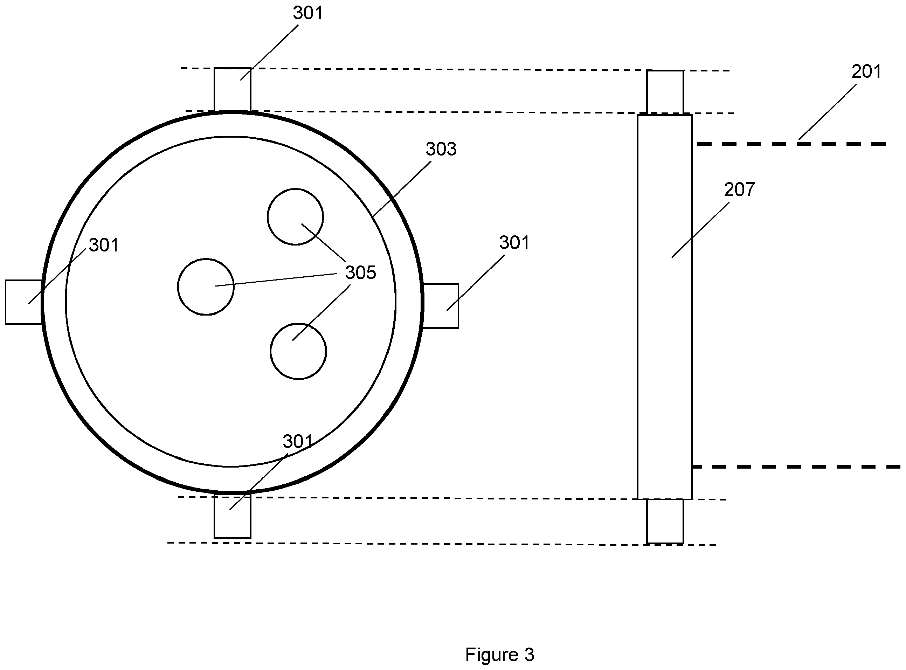

Figure 3 is a schematic representation of a thermally conductive coupling according to an example. In the example of figure 3, the thermally conductive coupling 207 is shown in side view (as in figure 2) on the right hand side of the figure, with a corresponding front view on the left hand side of the figure. Figure 3 depicts an example of a mechanical attachment structure in the form of male protrusions 301. Four such protrusions 301 are depicted in figure 3, which are spaced equally around the periphery of a circular thermally conductive coupling 207. The protrusions 301 can be an integral part of the thermally conductive coupling 207. Alternatively, they may be separate items that are fixed to the thermally conductive coupling 207. It will be appreciated that i) more or less such protrusions may be provided, and/or ii) the position of the or each protrusion around the periphery of the thermally conductive coupling 207 may vary from that shown, and/or iii) that the shape of the thermally conductive coupling 207 may be different from that shown. For example, the thermally conductive coupling 207 may be square, rectangular, oval and so on. In such cases, a payload may be mounted to the thermally conductive coupling by way of interference fit for example.

In the example shown in figure 3, a portion of a payload configured to be mounted to an aircraft by way of the mounting structure can comprise corresponding female receptors in the form of, e.g., openings or channels that engage with the protrusions 301 in order to secure the payload to the mounting structure. For example, the protrusions 301 can form the male part of a bayonet-type fitting or mount that is configured to engage with suitably profiled channels in a payload. The converse may be provided according to an example. That is, protrusions 301 may be provided on a payload, with corresponding suitably profiled channels provided in the thermally conductive coupling 207.

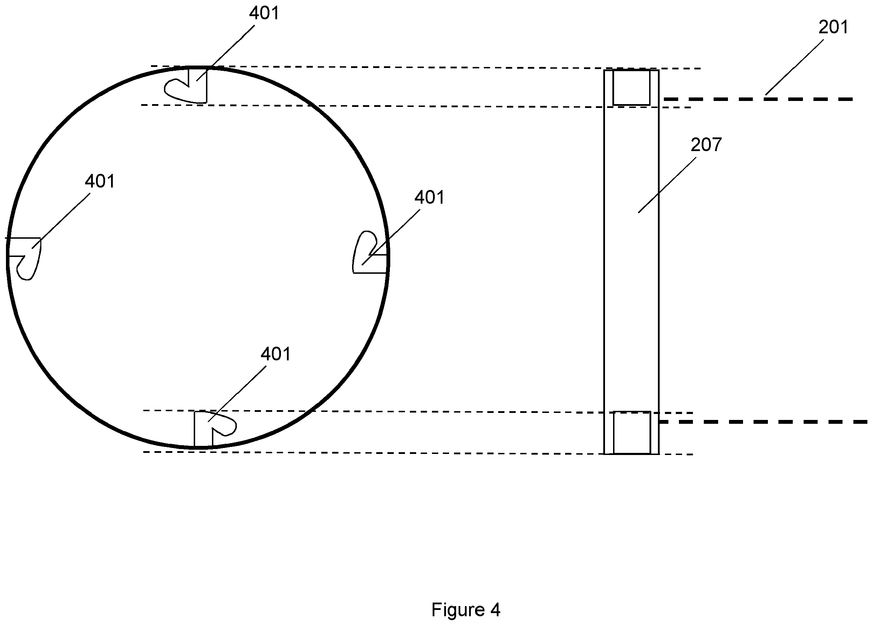

Figure 4 is a schematic representation of a thermally conductive coupling according to an example. In the example of figure 4, the thermally conductive coupling 207 is shown in side view (as in figure 2) on the right hand side of the figure, with a corresponding front view on the left hand side of the figure. Figure 4 depicts an example of a mechanical attachment structure in the form of female portions 401, which are in the form of receiving channels to receive corresponding protrusions on a payload for a bayonet mount.

In any example described above, the protrusions may be any suitable shape or profile, including square, cylindrical and so on. Protrusions and/or receiving channels and so on are, in an example, so positioned such that mounting of a payload does not completely cover the thermally conductive coupling from an airflow experienced as the aircraft moves. That is, there is at least a portion of the thermally conductive coupling that is provided within such an airflow in order to enable heat to be dissipated therefrom. As such, protrusions and/or receiving channels and so on may be offset or biased towards the front end of the thermally conductive coupling in order that a portion, such as a circumferential portion, is exposed in use.

The thermal management system 205 comprises a bimetallic strip so configured as to mechanically displace in response to heat generated by an electronic support system in the housing 203. Accordingly, a portion of the bimetallic strip is configured to come into contact with the thermally conductive coupling 207 so as to dissipate heat.

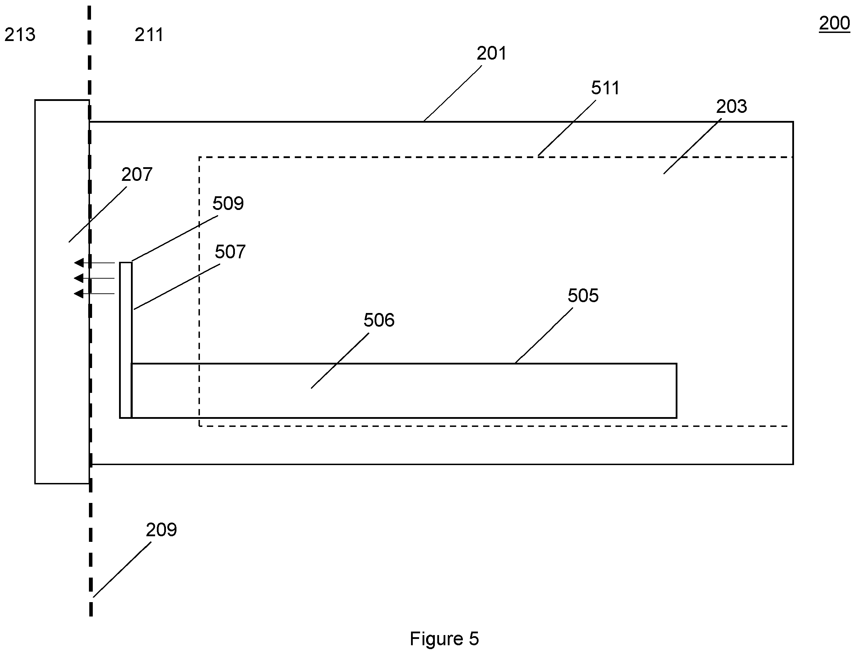

Figure 5 is a schematic representation of a mounting structure according to an example. In the example of figure 5, a thermal management system 505 is depicted that comprises a bimetallic strip 507. The bimetallic strip 507 is fixed to or forms part of a body portion 506 of the thermal management system 505 such that, upon reaching a threshold temperature due to heat being transferred from the body 506 of the thermal management system 505, the end 509 of the strip 507 deflects in the direction of the arrows toward the thermally conductive coupling 207. Deflection of the strip 507 will therefore cause it to come into contact with the thermally conductive coupling 207. Accordingly, contact between the end 509 of the strip 507 and the thermally conductive coupling 207 cause heat to be dissipated to the outside environment. As the heat is dissipated, the strip 507 can return to a 'rest' (undeflected) position. Further heat buildup (of, e.g., the body 506) to the point that the threshold temperature is again reached will cause deflection again as described above.

In an example, the thermal management system 505 may comprise multiple structures such as that depicted in figure 5. Such structures can be disposed at multiple points within the housing in order to provide temperature regulation using multiple bimetallic strips that can deflect upon reaching a threshold temperature, or which serve a single strip. Alternatively, the thermal management system 505 can be so shaped or profiled as to match the shape or profile of the housing 203 such that it is disposed, for example, around the surface 511 of the housing 203.

In an example, the thermal management system 205 can comprise a heat pipe to transfer heat to the thermally conductive coupling 207. The heat pipe can comprise a working fluid selected such that the heat pipe contains vapour of the working liquid and working liquid over a selected temperature range corresponding to an operating temperature range of an electronic support system.

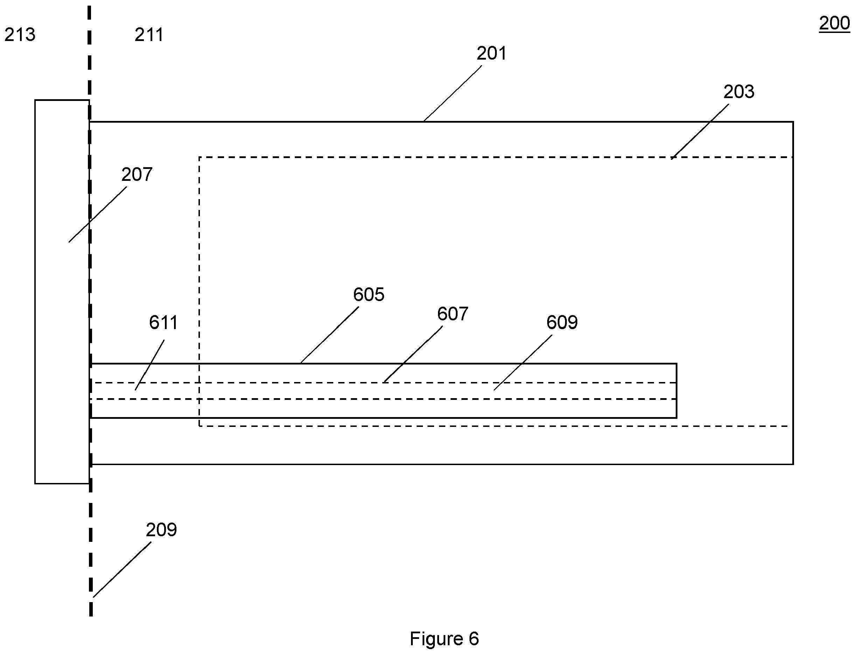

Figure 6 is a schematic representation of a mounting structure according to an example. In the example of figure 6, a thermal management system 605 is depicted that comprises a heat pipe 607. A first end 609 of the heat pipe can be situated adjacent to an electronic support system in the housing 203. A second end 611 of the heat pipe can be situated adjacent to or in contact with the thermally conductive coupling 207.

The heat pipe 607 is configured such that, in response to heat generated by an electronic support system within the housing 203, the working liquid can heat up at the first end 609 of the heat pipe 607 and condense at the second end 611 of the heat pipe thereby resulting in a transfer of heat to the thermally conductive coupling 207. As in the example of figure 5, multiple such structures can be provided within the housing 203.

According to an example, the mounting structure 200 can comprise an interface plate. Such an interface plate 303 is depicted in figure 3. The interface plate 303 can comprise one or more apertures 305 to enable connections to be made from a payload to an electronic support system within the housing 203.

A mounting structure as described herein may thus be provided on an aerial vehicle such as that depicted in and with reference to figure 1, whereby to enable a payload to be removably mounted to the aerial vehicle.

## Claims

1. A mounting structure 200 for securing a payload to an aerial vehicle and for thermally regulating an electronic support system for the payload, the mounting structure 200 comprising:
a body section 201 defining a housing 203 having a thermal management system 205, wherein the housing 203 is configured to receive the electronic support system; and
a thermally conductive coupling 207 adapted to mechanically couple the payload to the body section 201,
**characterised in that** the thermal management system 205 comprises a bimetallic strip configured to mechanically displace in response to heat, to cause a portion of the bimetallic strip to come into contact with the thermally conductive coupling so as to transfer heat generated by the electronic support system to the thermally conductive coupling 207 where it is dissipated away from the mounting structure 200, thereby enabling temperature regulation.

2. The mounting structure 200 as claimed in claim 1, wherein the thermally conductive coupling 207 forms an integral part of the body section 201.

3. The mounting structure 200 as claimed in claim 1, wherein the thermally conductive coupling 207 is disposed on the body section 201.

4. The mounting structure 200 as claimed in any preceding claim, wherein the thermally conductive coupling 207 comprises a mechanical attachment structure.

5. The mounting structure 200 as claimed in claim 4, wherein the mechanical attachment structure comprises a male fastening mechanism 301 so configured as to engage with a female receptor, or vice-versa.

6. The mounting structure 200 as claimed in claim 4, wherein the mechanical attachment structure is so profiled as to enable an interference fit between the mechanical attachment structure and a portion of the payload.

7. The mounting structure 200 as claimed in any of claims 4 to 6, wherein the mechanical attachment structure comprises a sleeve or collar configured to receive the portion of the payload.

8. The mounting structure 200 as claimed in any preceding claim, wherein the thermal management system 605 comprises a heat pipe 607 to transfer heat to the thermally conductive coupling 207.

9. The mounting structure 200 as claimed in claim 8, wherein the heat pipe 607 is configured such that, in response to heat generated by the electronic support system, a working liquid tends to evaporate at a first end 609 of the heat pipe 607 situated adjacent to the electronic support system and condense at a second end 611 of the heat pipe 607 situated adjacent to or in contact with the thermally conductive coupling 207 thereby resulting in a transfer of heat to the thermally conductive coupling 207.

10. The mounting structure 200 as claimed in any preceding claim, wherein the body section 201 further comprises an interface plate 303 defining one or more apertures 305 to enable connections to be made from the payload to the electronic support system within the housing.

11. An aerial vehicle 100 comprising a mounting structure 200 as claimed in any preceding claim, whereby to enable the payload to be removably mounted to the aerial vehicle.

12. The aerial vehicle 100 as claimed in claim 11, wherein the aerial vehicle 100 is a high-altitude long endurance unmanned aerial vehicle.

13. The aerial vehicle 100 as claimed in claim 11 or 12, comprising a fuselage (104) and a wing (106), wherein the mounting structure 200 is provided on the fuselage 104 or the wing 106 of the aerial vehicle 100.

## Patentansprüche

1. Montagestruktur 200 zum Sichern einer Nutzlast an einem Luftfahrzeug und zum thermischen Regulieren eines elektronischen Stützsystems für die Nutzlast, die Montagestruktur 200 umfassend:
einen Körperabschnitt 201, der ein Gehäuse 203 definiert, das ein Thermomanagementsystem 205 aufweist, wobei das Gehäuse 203 konfiguriert ist, um das elektronische Stützsystem aufzunehmen; und
eine thermisch leitfähige Kopplung 207, die angepasst ist, um die Nutzlast mit dem Körperabschnitt 201 mechanisch zu koppeln,
**dadurch gekennzeichnet, dass** das Thermomanagementsystem 205 einen Bimetallstreifen umfasst, der konfiguriert ist, um sich als Reaktion auf Wärme mechanisch zu verschieben, um einen Teil des Bimetallstreifens zu veranlassen, mit der thermisch leitfähigen Kopplung in Kontakt zu kommen, um die Wärme, die durch das elektronische Stützsystem erzeugt wird, an die thermisch leitfähige Kopplung 207 zu übertragen, wo sie von der Montagestruktur 200 abgeleitet wird, wobei dadurch eine Temperaturregulierung ermöglicht wird.

2. Montagestruktur 200 nach Anspruch 1, wobei die thermisch leitfähige Kopplung 207 ein integrales Stück des Körperabschnitts 201 ausbildet.

3. Montagestruktur 200 nach Anspruch 1, wobei die thermisch leitfähige Kopplung 207 an dem Körperabschnitt 201 angeordnet ist.

4. Montagestruktur 200 nach einem der vorstehenden Ansprüche, wobei die thermisch leitfähige Kopplung 207 eine mechanische Befestigungsstruktur umfasst.

5. Montagestruktur 200 nach Anspruch 4, wobei die mechanische Befestigungsstruktur einen männlichen Fixierungsmechanismus 301 umfasst, der so konfiguriert ist, dass er in eine weibliche Aufnahme eingreift, oder umgekehrt.

6. Montagestruktur 200 nach Anspruch 4, wobei die mechanische Befestigungsstruktur so profiliert ist, dass eine Presspassung zwischen der mechanischen Befestigungsstruktur und einem Teil der Nutzlast ermöglicht wird.

7. Montagestruktur 200 nach einem der Ansprüche 4 bis 6, wobei die mechanische Befestigungsstruktur eine Hülse oder einen Bund umfasst, die konfiguriert sind, um den Teil der Nutzlast aufzunehmen.

8. Montagestruktur 200 nach einem der vorstehenden Ansprüche, wobei das Thermomanagementsystem 605 ein Wärmerohr 607 umfasst, um Wärme auf die thermisch leitfähige Kopplung 207 zu übertragen.

9. Montagestruktur 200 nach Anspruch 8, wobei das Wärmerohr 607 derart konfiguriert ist, dass, als Reaktion auf die Wärme, die durch das elektronische Stützsystem erzeugt wird, eine Arbeitsflüssigkeit dazu neigt, an einem ersten Ende 609 des Wärmerohrs 607, das sich neben dem elektronischen Stützsystem befindet, zu verdampfen und an einem zweiten Ende 611 des Wärmerohrs 607, das sich neben oder in Kontakt mit der thermisch leitfähigen Kopplung 207 befindet, zu kondensieren, wobei dadurch eine Übertragung von Wärme auf die thermisch leitfähige Kopplung 207 erfolgt.

10. Montagestruktur 200 nach einem der vorstehenden Ansprüche, wobei der Körperabschnitt 201 ferner eine Schnittstellenplatte 303 umfasst, die eine oder mehrere Öffnungen 305 definiert, um zu ermöglichen, dass Verbindungen von der Nutzlast zu dem elektronischen Stützsystem innerhalb des Gehäuses hergestellt werden können.

11. Luftfahrzeug 100, umfassend eine Montagestruktur 200 nach einem der vorstehenden Ansprüche, wodurch ermöglicht wird, dass die Nutzlast an dem Luftfahrzeug abnehmbar montiert werden kann.

12. Luftfahrzeug 100 nach Anspruch 11, wobei das Luftfahrzeug 100 ein unbemanntes High-Altitude-Long-Endurance-Luftfahrzeug ist.

13. Luftfahrzeug 100 nach Anspruch 11 oder 12, umfassend einen Rumpf (104) und einen Flügel (106), wobei die Montagestruktur 200 an dem Rumpf 104 oder dem Flügel 106 des Luftfahrzeugs 100 bereitgestellt ist.

## Revendications

1. Structure de montage 200 permettant de fixer une charge utile à un véhicule aérien et permettant de réguler thermiquement un système de support électronique pour la charge utile, la structure de montage 200 comprenant :
une section de corps 201 définissant un logement 203 ayant un système de gestion thermique 205, dans laquelle le logement 203 est conçu pour recevoir le système de support électronique ; et
un accouplement thermoconducteur 207 adapté pour accoupler mécaniquement la charge utile à la section de corps 201,
**caractérisée en ce que** le système de gestion thermique 205 comprend un bilame conçu pour se déplacer mécaniquement en réponse à de la chaleur, pour amener une partie du bilame à venir en contact avec l'accouplement thermoconducteur de façon à transférer de la chaleur générée par le système de support électronique vers l'accouplement thermoconducteur 207 où elle est dissipée à l'écart de la structure de montage 200, en permettant de ce fait une régulation de température.

2. Structure de montage 200 selon la revendication 1, dans laquelle l'accouplement thermoconducteur 207 forme une partie intégrante de la section de corps 201.

3. Structure de montage 200 selon la revendication 1, dans laquelle l'accouplement thermoconducteur 207 est disposé sur la section de corps 201.

4. Structure de montage 200 selon l'une quelconque revendication précédente, dans laquelle l'accouplement thermoconducteur 207 comprend une structure de fixation mécanique.

5. Structure de montage 200 selon la revendication 4, dans laquelle la structure de fixation mécanique comprend un mécanisme de fixation mâle 301 conçu de façon à venir en prise avec un récepteur femelle, ou inversement.

6. Structure de montage 200 selon la revendication 4, dans laquelle la structure de fixation mécanique est profilée de façon à permettre un ajustement serré entre la structure de fixation mécanique et une partie de la charge utile.

7. Structure de montage 200 selon l'une quelconque des revendications 4 à 6, dans laquelle la structure de fixation mécanique comprend une gaine ou un collier conçu pour recevoir la partie de la charge utile.

8. Structure de montage 200 selon l'une quelconque revendication précédente, dans laquelle le système de gestion thermique 605 comprend un caloduc 607 pour transférer de la chaleur vers l'accouplement thermoconducteur 207.

9. Structure de montage 200 selon la revendication 8, dans laquelle le caloduc 607 est conçu de telle sorte que, en réponse à de la chaleur générée par le système de support électronique, un liquide de travail a tendance à s'évaporer au niveau d'une première extrémité 609 du caloduc 607 située adjacente au système de support électronique et à se condenser au niveau d'une seconde extrémité 611 du caloduc 607 située adjacente à, ou en contact avec, l'accouplement thermoconducteur 207 résultant de ce fait en un transfert de chaleur vers l'accouplement thermoconducteur 207.

10. Structure de montage 200 selon l'une quelconque revendication précédente, dans laquelle la section de corps 201 comprend en outre une plaque d'interface 303 définissant une ou plusieurs ouvertures 305 pour permettre à des liaisons d'être réalisées de la charge utile vers le système de support électronique au sein du logement.

11. Véhicule aérien 100 comprenant une structure de montage 200 selon l'une quelconque revendication précédente, moyennant quoi elle permet à la charge utile d'être montée de manière amovible au véhicule aérien.

12. Véhicule aérien 100 selon la revendication 11, dans lequel le véhicule aérien 100 est un véhicule aérien sans pilote à haute altitude et longue autonomie.

13. Véhicule aérien 100 selon la revendication 11 ou 12, comprenant un fuselage (104) et une aile (106), dans lequel la structure de montage 200 est fournie sur le fuselage 104 ou sur l'aile 106 du véhicule aérien 100.
